(19) Europäisches Patentamt
European Patent Office
Office européen des brevets

(11) **EP 1 628 812 B1**

(12) **EUROPÄISCHE PATENTSCHRIFT**

(45) Veröffentlichungstag und Bekanntmachung des Hinweises auf die Patenterteilung:
**10.09.2008 Patentblatt 2008/37**

(21) Anmeldenummer: 04732068.4

(22) Anmeldetag: **11.05.2004**

(51) Int Cl.:
*B29B 13/10* (2006.01)    *B29B 17/00* (2006.01)
*B29C 47/10* (2006.01)    *B29C 47/58* (2006.01)

(86) Internationale Anmeldenummer:
**PCT/AT2004/000166**

(87) Internationale Veröffentlichungsnummer:
**WO 2004/108379 (16.12.2004 Gazette 2004/51)**

(54) **VORRICHTUNG ZUR AUFBEREITUNG VON KUNSTSTOFFMATERIAL ZU RECYCLINGZWECKEN**

DEVICE FOR PREPARATION OF PLASTIC MATERIALS FOR RECYCLING PURPOSES

DISPOSITIF DE TRAITEMENT D'UN MATERIAU PLASTIQUE EN VUE DE SON RECYCLAGE

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.06.2003 AT 8872003**

(43) Veröffentlichungstag der Anmeldung:
**01.03.2006 Patentblatt 2006/09**

(73) Patentinhaber: **EREMA Engineering Recycling Maschinen und Anlagen Gesellschaft m.b.H.**
**4052 Ansfelden (AT)**

(72) Erfinder:
• **Helmut Bacher**
**4490 St. Florian (AT)**
• **Helmuth Schulz**
**4020 Linz (AT)**
• **Georg Wendelin**
**4033 Linz (AT)**

(74) Vertreter: **Wildhack, Helmut Patentanwälte**
**Dipl.-Ing. Dr. Helmut Wildhack**
**Dipl.-Ing. Dr.Gerhard Jellinek**
**Landstrasser Hauptstrasse 50**
**1030 Wien (AT)**

(56) Entgegenhaltungen:
WO-A-00/74912          WO-A-01/39948
DE-A- 2 351 328        US-A- 3 327 347
US-A- 3 355 766        US-A- 3 360 824

## Beschreibung

Die Erfindung bezieht sich auf eine Vorrichtung zur Aufbereitung von Kunststoffmaterial zu Recyclingzwecken nach dem Anspruch 1.

Eine deratige Vorrichtung gemäß dem Olerlegiff des Ansprus 1 ist durch WO-A-01/39948 offenbert. Auch AT 407972 B and WO-A-00/74992 offenbonen eine ähliche Vorrichtung. Sie weisen zumeist eine Extruder-Schnecke auf, welche das von ihr geförderte Material direkt der nachgeschalteten Verarbeitung, zumeist einer Granuliereinrichtung, zuführt. Die Schnecke kann aber auch eine reine Transportschnecke sein, welche das Material einer nachgeschalteten Bearbeitungsstufe zuführt, z. B. einer nochmaligen Bearbeitung mittels umlaufender Werkzeuge, wobei erst aus dieser Bearbeitungsstufe das Material einer Plastifizier- oder Agglomeriereinrichtung zugeführt wird. Die bekannten Vorrichtungen arbeiten im Prinzip zufriedenstellend, haben aber häufig Schwierigkeiten hinsichtlich der Befütterung der an die Ausbringeöffnung angeschlossenen Einrichtung, insbesondere dann, wenn es sich bei dieser Einrichtung um eine Plastifizier- oder Agglomeriereinrichtung handelt. Angestrebt wird ein möglichst gleichmäßiger Einzug an der Schnecke und damit ein möglichst gleichmäßiger Austrag der Einrichtung, was insbesondere dann von Wichtigkeit ist, wenn an einen Extruder eine Formanlage angeschlossen ist, bei der es darauf ankommt, dass ihr das zu formende Material möglichst gleichmäßig zugeführt wird. Die erwähnten Schwierigkeiten sind unter anderem dadurch bedingt, dass das zu verarbeitende Material zumeist stark unterschiedlich ist, sowohl hinsichtlich der chemischen Zusammensetzung des Materials, als auch hinsichtlich seiner äußeren Beschaffenheit (Verschmutzungsgrad, Teilchengröße, Teilchenform usw.).

Die Erfindung setzt sich zur Aufgabe, diese Schwierigkeiten zu überwinden und eine Vorrichtung der eingangs geschilderten Art so zu verbessern, dass ein möglichst gleichmäßiger Einzug des zu verarbeitenden Materiales in die Einzugsöffnung des Schneckengehäuses erzielt wird, welche an die Ausbringeöffnung angeschlossen ist, sodass ein gleichmäßiger Ausstoß am Austragsende der Schnecke, insbesondere einer Plastifizier- oder Agglomeriereinrichtung, erzielt wird. Die Erfindung löst diese Aufgabe dadurch, dass die Erweiterung sich, in Richtung zur Achse des Gehäuses von zwei oder mehr Schnecken gesehen, über einen Teil des Umfanges der Schneckengänge der benachbarten Schnekke erstreckt, vorzugsweise bis in den Bereich der Schneckenachse, sodass die schneckenseitige Kante dieser Erweiterung eine mit diesen Schneckengängen zusammenwirkende unterbrechungslose Scherkante bildet. Dadurch ergibt sich ein konstanter Einzug des zu verarbeitenden Materiales in die Einzugsöffnung der Schnecke, auch dann, wenn das Material im Behälter warmweich ist. Es ist anzunehmen, dass diese verbesserte Wirkungsweise auf die vergleichsweise lange Scherkante zurückzuführen ist, welche vom schneckenseitigen Rand der Erweiterung gebildet wird. Ein weiterer wesentlicher Vorteil der erfindungsgemäßen Konstruktion liegt darin, dass die bisher im Einzugsbereich zumeist notwendige, gegebenenfalls gekühlte, Nutenbüchse, welche einem starken Verschleiß unterliegt, entfällt (eine solche Nutenbüchse ist z.B. aus DE 23 51 328 A bekannt). Dies bringt nicht nur eine Kostenersparnis, sondern auch den Vorteil eines geringeren Anfahrdrehmomentes für den Antriebsmotor.

Aus US-A-3,327,347 ist es bei einem Einschneckenextruder bekannt, das Schneckengehäuse von oben her durch einen radial zur Schneckenachse angeordneten Einfüllstutzen her zu befüttern. In diesem Einfüllstutzen ist ein Rührwerkzeug angeordnet, um die Einbringung von Pulver sehr geringer Dichte in die Einzugsöffnung des Schneckengehäuses zu erleichtern. Die Einzugsöffnung hat eine sich in Förderrichtung der Schnecke über mehrere Schneckengänge erstreckende Tasche, deren Weite in Förderrichtung der Schnecke abnimmt. Abgesehen davon, dass es sich nicht um einen Doppelschneckenextruder handelt, kann als Folge der abweichenden Relativanordnung von Schnecke, Einzugsöffnung und Werkzeug eine solche Vorrichtung nicht im Sinne der Erfindung arbeiten.

Gemäß einer besonders günstigen Weiterbildung der Erfindung schließt die die Erweiterung umrandende Seitenwand der Einzugsöffnung mit der Schneckenachse einen Winkel von 20° bis 80°, vorzugsweise 30 bis 55°, ein. Ebenso hat es sich durch Versuche als besonders günstig für das erwähnte Einzugsverhalten erwiesen, wenn für die Einzugsöffnung des Gehäuses der Schnecken folgende Formeln gelten:

$$h \geq k\, 0{,}6\, d$$

und

$$L \geq k\, 0{,}6\, d,$$

worin

h  die in Achsrichtung des Behälters gemessene wirksame Höhe der Einzugsöffnung in mm ist,

L  die in Umfangsrichtung des Behälters gemessene wirksame Länge der Einzugsöffnung in mm ist,

d  der Außendurchmesser der Schnecken in mm ist und

k  die Anzahl der Schnecken ist, wobei k vorzugsweise 2 ist.

Ferner ist es günstig, wenn der Boden der Enzugsöffnung von den Schnecken in Richtung zum Behälter abfällt.

Die Schnecken können Plastifizier- oder Agglomerierschnecken sein, aber auch reine Transportschnecken. Bei Doppelschneckenkonstruktionen hatte man bisher das Bedenken der relativ hohen Kosten, doch haben die Erfahrungen der Anmelder gezeigt, dass die komplizierten Maßnahmen, welche bei Einschneckenkonstruktionen notwendig waren, um ein einigermaßen gleichmäßiges Einzugsverhalten zu erzielen; sich den Kosten einer Doppelschneckenkonstruktion annähern. Hinzu kommt, dass, im Vergleich zu Einschneckenkonstruktionen, die Schnecken und deren Zylinder von Doppelschneckenkonstruktionen wesentlich kürzer gebaut werden können, etwa um die Hälfte verkürzt, und bei gleichem Schneckendurchmesser etwa der 1,5- bis 2-fache Ausstoß (z.B. bei Verarbeitung von Polyethylen) erreicht wird. Bei gleichem Ausstoß der Vorrichtung ergibt sich ein wesentlich verringerter Platzbedarf.

Jedoch haben die Versuche der Anmelder gezeigt, dass es bei Doppelschneckenkonstruktionen zur Aufrechterhaltung der Vorteile des Einzugsverhaltens günstig ist, wenn der Durchmesser D des Behälters zum Durchmesser d jeder der beiden Schnecken in folgender Beziehung steht:

$$D = 10\ \sqrt[3]{d^2 K}\ ,$$

worin

D    der Innendurchmesser des kreiszylindrischen Behälters in mm oder der Innendurchmesser eines auf gleiches Fassungsvermögen umgerechneten fiktiven kreiszylindrischen Behälters gleicher wirksamer Höhe ist,

d    der Schneckendurchmesser in mm und

K    eine Konstante ist, welche größer oder gleich 50 ist, vorzugsweise größer als 100.

Für nicht kreiszylindrische Behälter bzw. nicht konstanten Schneckendurchmesser ist umzurechnen, worauf später noch näher eingegangen wird.

Bei solchen Doppelschneckenkonstruktionen ergeben sich im Zwickelbereich der beiden Schnecken bessere Plastifiziereigenschaften, da dort das Material durch Scherung und Knetwirkung besonders intensiv bearbeitet wird. Es hat sich auch gezeigt, dass eine solche Konstruktion hinsichtlich der Schneckengeometrie unempfindlicher ist auf die Verarbeitung voneinander unterschiedlicher Kunststoffsorten, sodass die Vorrichtung universeller einsetzbar ist.

Weiters hat es sich im Rahmen der Erfindung gezeigt, dass die Befütterung der von den beiden Schnecken und ihrem Gehäuse gebildeten Einrichtung, insbesondere wenn diese von einer Plastifizier- oder Agglomeriereinrichtung gebildet ist, um so besser wird, je kleiner die vom Material berührte Oberfläche ist, die für das zu verarbeitende Material zwischen Behälter und den Schnecken vorliegt. Gemäß einer Weiterbildung der Erfindung ist daher die Konstruktion so getroffen, dass bei zwei Schnecken im Gehäuse die Schnecken möglichst nahe dem behälterseitigen Rand der Einzugsöffnung liegen. Das Gehäuse der von den Schnecken gebildeten Plastifizier- oder Agglomeriereinrichtung ist daher unmittelbar an die Ausbringeöffnung des Behälters angeschlossen, sodass die Einzugsöffnung des Gehäuses der Plastifizier- oder Agglomeriereinrichtung der Ausbringeöffnung des Behälters unmittelbar benachbart ist oder mit ihr zusammenfällt.

Die günstigste Anordnung im Rahmen der Erfindung ergibt sich, wenn die Querschnitte der beiden Schnecken im Gehäuse der Plastifizier- oder Agglomeriereinrichtung im Bereich der Einzugsöffnung vertikal oder schräg übereinander liegen. Diese Vertikalanordnung ergibt die kleinste Oberfläche, welche das zu verarbeitende Material, welches mitunter klebrig sein kann, vom Behälter zu den beiden Schnecken überwinden muss. Dies ist von Bedeutung, um ein Ankleben des Materiales an diesen Oberflächenabschnitten zu vermeiden. Wird von der Vertikalanordnung abgewichen, z.B. bei einer schrägen Anordnung der beiden Schneckenquerschnitte oder gar bei einer Nebeneinanderanordnung, dann ist es zumeist erforderlich, im Gehäuse der Plastifizier- bzw. Agglomeriereinrichtung im Bereich der Einzugsöffnung Kühlkanäle anzuordnen, um ein Ankleben des verarbeiteten Materiales an diesen Oberflächenabschnitten und eine dadurch verursachte Überhitzung des dort gestauten Materiales zu verhindern.

Die Gänge der beiden Schnecken können zumindest im Bereich der Einzugsöffnung miteinander kämmen. Dies hat den Vorteil einer Selbstreinigung der Schneckengänge, was gerade im Einzugsbereich von Wichtigkeit ist. Wenngleich gleiche Schneckendurchmesser der beiden Schnecken zweckmäßig sind, ist dies nicht unbedingt erforderlich und es können die beiden Schnecken auch unterschiedliche Längen aufweisen, z.B. dann, wenn die eine Schnecke als Zubringerschnecke für die andere Schnecke wirkt.

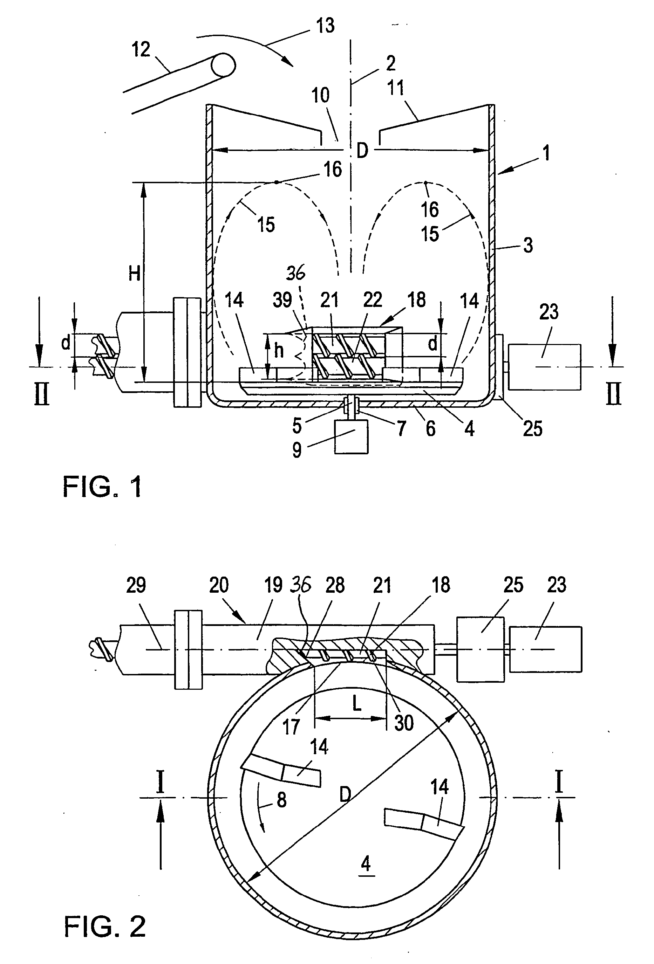

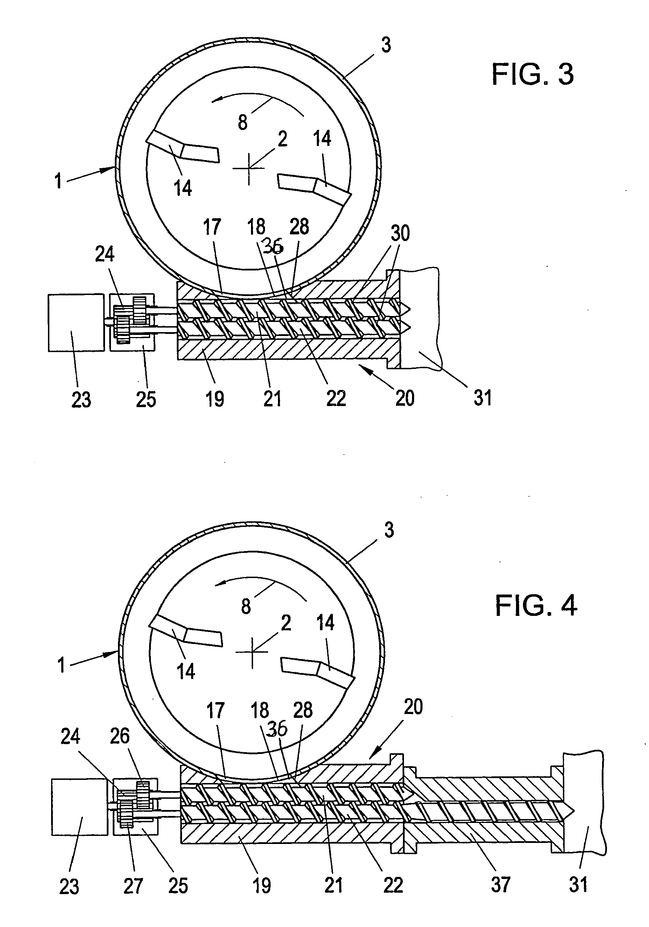

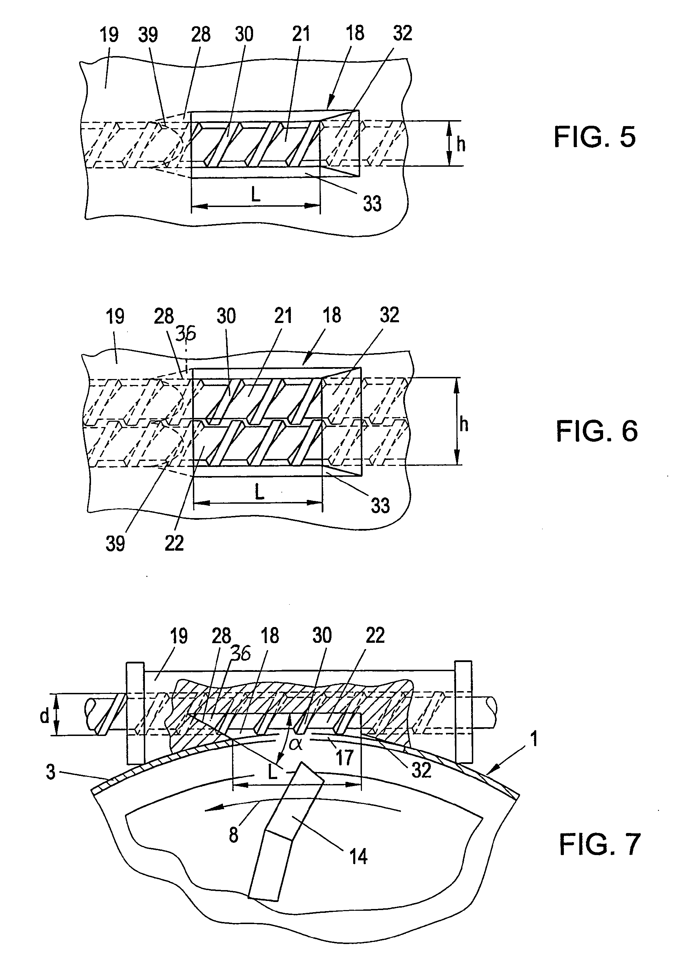

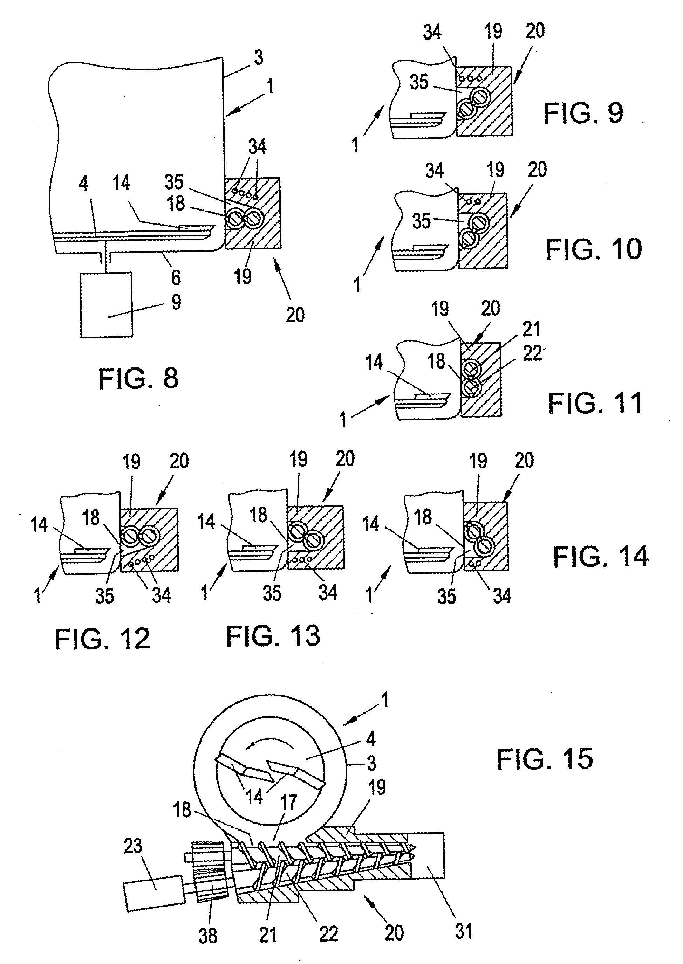

Weitere Kennzeichen und Vorteile der Erfindung ergeben sich aus der Beschreibung von Ausführungsbeispielen des Erfindungsgegenstandes, welche in der Zeichnung schematisch dargestellt sind. Fig. 1 zeigt einen Vertikalschnitt durch eine erste Ausführungsform, gesehen nach der Schnittlinie I - I der Fig. 2, welche einen Schnitt nach der Linie II - II der Fig. 1 zeigt. Fig. 3 zeigt eine Ausführungsform im Horizontalschnitt mit zwei nebeneinanderliegenden Schnecken gleicher Länge. Fig. 4 zeigt eine Ausführungsvariante zu Fig. 3, bei welcher die beiden Schnecken unterschiedliche Länge aufweisen. Die Fig. 5, 6 und 7 zeigen die Ausbildung der Einzugsöffnung im Schnitt. Die Fig. 8 bis 14 zeigen, jeweils im Vertikalschnitt, verschiedene Möglichkeiten für die Anordnung der Schnecken bei Doppelschneckenkonstruktionen. Fig. 15 zeigt im Horizontalschnitt eine Anordnung mit einem konischen Doppelschneckenextruder.

Bei der Vorrichtung nach den Fig. 1, 2, und 6 liegt eine Zerreißer-Extruder-Kombination mit Doppelschnecke vor, welche einen Behälter 1 mit vertikaler Achse 2 und Kreisquerschnitt hat, dessen Seitenwand 3 im Wesentlichen zylindrisch verläuft. Im Behälter 1 läuft um die Achse 2 eine Trägerscheibe 4 in Richtung des Pfeiles 8 (Fig. 2) um, die auf einer Welle 5 sitzt, die den Boden 6 des Behälters 1 abgedichtet durchsetzt und im Boden 6 in Lagern 7 drehbar gelagert ist. Die Welle 5 wird von einem Motor 9 zur Drehung angetrieben.

Der Behälter 1 hat oben eine Einbringeöffnung 10 für das zu verarbeitende Material, zweckmäßig in einer trichterförmig verlaufenden Deckwand 11. Wenn das Material unter Vakuum verarbeitet werden soll, ist an den Behälter 1 eine Evakuiereinrichtung angeschlossen, und die Einbringeöffnung 10 ist mit einer zweckmäßig gleichfalls evakuierbaren Schleuse versehen. Zur Einbringeöffnung 10 wird das zu verarbeitende Material von einer Zubringeeinrichtung 12, z.B. einem Förderband, zugeführt und in Richtung des Pfeiles 13 in die Öffnung 10 eingeworfen.

Die im Bereich des Bodens 6 angeordnete Trägerscheibe 4 trägt mehrere Werkzeuge 14, die auf das in den Behälter 1 eingebrachte Material, zumeist thermoplastische Recyclingware, zumindest mischend einwirken, zumeist auch zerkleinernd und trocknend. In letzterem Fall sind die Werkzeuge 14 als Messer mit Schneiden ausgebildet. Das von den Werkzeugen 14 von der Trägerscheibe 4 abgeschleuderte Material steigt an der Seitenwand 3 des Behälters 1 in Form einer Mischtrombe 15 hoch und fällt nach Erreichung eines Kulminationspunktes 16 wieder in den Bereich der Behälterachse 2 zurück. Auf diese Weise wird das verarbeitete Material gut durchgemischt bzw. zerkleinert und getrocknet und nach Erreichung einer genügenden Verweilzeit im Behälter 1 aus diesem durch eine Ausbringeöffnung 17 (Fig. 2) ausgebracht, welche in der dargestellten Ausführungsform mit der Einzugsöffnung 18 des Gehäuses 19 einer Doppelschneckenanordnung einer Plastifizier- bzw. Agglomeriereinrichtung 20, z.B. eines Extruders, zusammenfällt, zumindest aber damit in Strömungsverbindung steht. Die Einrichtung 20 weist zwei im Gehäuse 19 angeordnete Schnecken 21, 22 auf, die von einem Motor 23 in der gleichen Drehrichtung gleichlaufend angetrieben werden, so dass ihre Schneckengänge miteinander kämmen können. Eine hierzu geeignete mögliche Antriebsanordnung ist in den Fig. 3 und 4 dargestellt. Der Motor 23 treibt ein Sonnenzahnrad 24 an, das in einem Getriebegehäuse 25 gelagert ist und zwei Planetenzahnräder 26, 27 antreibt, welche mit den Wellen der beiden Schnecken 21, 22 drehschlüssig verbunden sind.

Zur Erzielung einer - im Vergleich zu einem Einschneckenextruder - doppelten Ausstoßmenge hat es sich als vorteilhaft erwiesen, wenn die Behälterabmessungen der Beziehung nach folgender empirisch ermittelter Faustformel genügen:

$$D = 10 \sqrt[3]{d^2 K} ,$$

worin D der Innendurchmesser des Behälters 1 in mm ist, d der Schneckengangaußendurchmesser der beiden Schnecken 21, 22 in mm und K eine Konstante ist, welche zumindest 50 beträgt, vorzugsweise jedoch zumindest 100. Diese Formel gilt für einen kreiszylindrischen Behälter. Ist dieser Behälter nicht kreiszylindrisch oder nicht zylindrisch, etwa kegelförmig, so ist D umzurechnen auf den Innendurchmesser eines fiktiven kreiszylindrischen Behälters gleichen Fassungsvolumens, d.h. gleicher wirksamer Höhe. Als wirksame Höhe H gilt hierbei jede Distanz, in welcher der Kulminationspunkt 16 der Mischtrombe 15 über dem Oberrand der Trägerscheibe 4 liegt, sinnvolle Betriebsverhältnisse vorausgesetzt.

Für unterschiedliche Schneckendurchmesser ist in der zuvor erwähnten Formel für d der Mittelwert der Schneckendurchmesser zu nehmen. Wenn der Schneckendurchmesser über die Schneckenlänge nicht konstant ist (z.B. bei konischen Schnecken), dann ist der mittlere Schneckendurchmesser einzusetzen.

Wie erwähnt, ist aber auch die Bemessung und Gestaltung der Einzugsöffnung 18 des Schneckengehäuses 19 von Bedeutung. In diese Einzugsöffnung 18, die zumindest teilweise auf der Höhe der im Behälter 1 umlaufenden Werkzeuge 14 liegt, wird das im Behälter 1 gemischte, gegebenenfalls zerkleinerte, und dadurch erwärmte und gegebenenfalls getrocknete Kunststoffgut von den Werkzeugen 14 eingeschleudert. Dies kann dadurch unterstützt werden, dass die - in Pfeilrichtung 8 gesehen - vorlaufenden Kanten der Werkzeuge 14 entgegen der Bewegungsrichtung abgewinkelt oder gebogen sind, so dass sich beim Umlauf der Werkzeuge 14 eine spachtelartige Eindrückung des Materiales in die Einzugsöffnung 18 ergibt. Versuche haben ergeben, dass besonders günstige Verhältnisse vorlieben, wenn für die Einzugsöffnung 18 folgende Maße gelten:

$$h \geq k\,0{,}6\,d$$

und

$$L \geq k\,0{,}6\,d,$$

worin

h     die in Achsrichtung des Behälters 1 gemessene wirksame Höhe der Einzugsöffnung 18 in mm ist,

L     die in Umfangsrichtung des Behälters 1 gemessene wirksame Länge der Einzugsöffnung 18 in mm ist,

d     der Außendurchmesser der Schneckengänge in mm ist, und

k die Anzahl der Schnecken bedeutet, wobei k vorzugsweise 2 ist.

Als wirksame Länge bzw. wirksame Höhe der Einzugsöffnung 18 gilt hierbei der in Bezug auf die Durchtrittsrichtung des Materiales vom Behälter 1 in das Gehäuse 9 wirksame lichte Querschnitt. Für nicht konstante Schneckendurchmesser ist d wie zuvor erwähnt umzurechnen.

Ferner haben Versuche gezeigt, dass das in die Einzugsöffnung 18 eingebrachte Material mitunter dazu neigt, sich im Bereich jenes Randes der Einzugsöffnung 18 zu stauen, an welchem die Werkzeuge 14 ablaufen, in Fig. 2 also der linksliegende Rand der Einzugsöffnung 18. Um einen solchen Stau zu vermeiden, hat es sich als zweckmäßig erwiesen, jene Seitenwand 28 der Einzugsöffnung 18, an welcher die erwähnten Werkzeuge 14 ablaufen (das ist die in den Fig. 3 und 4 rechts liegende Seitenwand 28), so schräg in Bezug auf die Längsachse 29 des Schneckengehäuses 19 anzuordnen, dass sich, in Eintrittsrichtung des Kunststoffmateriales gesehen, eine in Richtung zur Schneckenachse kontinuierlich verlaufende Erweiterung 36 der Einzugsöffnung 18 bildet. Der Winkel α (Fig. 7), welchen diese Seitehwand 28 mit der Längsachse 29 des Schneckengehäuses 19 einschließt, beträgt jedenfalls weniger als 90°, und zwar 20 bis 80°, vorzugsweise 30 bis 55°. Die Seitenwand 28 erstreckt sich hierbei bis zumindest zum Umfang der Schneckengänge 30 der benachbarten Schnecke 21 bzw. 22, vorzugsweise bis in den Bereich der Achse dieser Schnecke. Diese Längsachse der Schnecke fällt bei einer vertikalen Anordnung der beiden Schnecken 21, 22, in der Draufsicht gesehen, mit der Achse 29 des Schneckengehäuses 9 zusammen (Fig. 2). In allen Fällen bildet die Kante dieser Seitenwand 28, insbesondere ihr Ende, eine mit den Schneckengängen 30 zusammenwirkende Scherkante 39 (Fig. 1, 5, 6), welche, da keine Nutenbüchse angeordnet ist, in Umfangsrichtung der Schnecken 21, 22 kontinuierlich, also unterbrechungslos, verläuft.

Bei der Ausführungsform nach den Fig. 1, 2 und 7 sind die beiden Schnecken 21, 22 vertikal übereinander angeordnet, und die Scheckenachsen liegen horizontal. Beides ist nicht unbedingt erforderlich, wenngleich diese Anordnungen am günstigsten sind. Wenn davon abgewichen werden muss, so können, wie die Fig. 3 und 4 zeigen, die beiden Schnecken 21, 22 horizontal nebeneinander liegen. Bei der Ausführungsform nach Fig. 3 sind beide Schnecken 21, 22 gleich lang und im gleichen Drehsinn angetrieben, ihre Schneckengänge 30 können miteinander kämmen. Beide Schnecken 21, 22 fördern somit gemeinsam in einen an das Schneckengehäuse 19 angeschlossenen Extruderkopf 31.

Die Anordnung nach Fig. 4 weicht von jener nach Fig. 3 insoferne ab, als die beiden Schnecken 21, 22 unterschiedliche Längen haben, und zwar ist die dem Behälter 1 benachbarte Schnecke 21 kürzer als die andere Schnecke 22. Die Schnecke 21 übernimmt daher das aus dem Behälter 1 durch dessen Ausbringeöffnung 17 in die Einzugsöffnung 18 des Schneckengehäuses 19 geschleuderte Material, wobei dieses Einzugsverhalten durch die zuvor erwähnte Bemessung des Behälters 1 und der Einzugsöffnung 18 sowie durch die Gestaltung der Seitenwand 28 derselben verbessert wird. Die Schnecke 21 übergibt im Laufe ihrer Förderstrecke das von ihr übernommene Material an die andere Schnecke 22, welche das Material dem angeschlossenen Extruderkopf 31 zuführt. Diese Anordnung hat außer dem Vorteil eines gleichmäßigen Einzuges noch die Vorteile eines billigeren Austragsgehäuses 37 und eines billigeren Einlaufstückes zum Extruderkopf 31.

Die nähere Ausbildung der Einzugsöffnung 18 für Konstruktionen nach den Fig. 3 und 4 ist in Fig. 5 dargestellt.

Aus den Fig. 5, 6 und 7 ist ersichtlich, dass auch an jenem Rand der Einzugsöffnung 18, an welchem die Werkzeuge 14 zulaufen, d.i. in den Fig. 5, 6 und 7 der rechts liegende Rand, eine Anschrägung 32 vorgesehen ist, um das Einzugsverhalten zu verbessern. Ferner ist der Boden 33 der Einzugsöffnung 18 in Richtung zum Behälter 1 hin geneigt, sodass die von ihm gebildete Wand der Einzugsöffnung von der Schnecke 22 in Richtung zum Behälter 1 abfällt.

Wie bereits erwähnt, können die beiden Schnecken 21, 22 im Prinzip jedwede Lage relativ zueinander einnehmen. Unterschiedliche Anordnungen sind in den Fig. 8 bis 14 dargestellt. Die in Fig. 11 dargestellte Lage der beiden Schnecken 21, 22 vertikal übereinander ist die günstigste Anordnung, weil dann die Gefahr des Anklebens von Kunststoffteilchen an der Oberfläche des Einzugsbereiches des Schneckengehäuses nicht gegeben ist, anders als bei anderer Lage der Schnecken 21, 22. Von der Anordnung nach Fig. 11 abweichende Anordnungen sind zwar im Prinzip auch brauchbar, jedoch ist bei solchen Anordnungen das erwähnte Ankleben von z.B. klebrigen Kunststoffteilchen und das daraus folgende Zuwachsen der Fütterungsöffnung möglich. Dies kann zu Überhitzungen dieser Materialteilchen führen. Um dies zu vermeiden, empfiehlt es sich, bei von Fig. 11 abweichenden Anordnungen der Schnecken 21, 22 Kühlkanäle 34 in jenem Bereich des von der Einzugsöffnung 18 berandeten Abschnittes des Gehäuses 19 anzuordnen, wo sich im Anschluss an die Einzugsöffnung 18 Hohlräume 35 befinden, die zu dem erwähnten Ankleben und den daraus folgenden übermäßig langen Verweilzeiten der bearbeiteten Materialteilchen führen können. Je größer diese Hohlräume 35 sind und je mehr sie sich im Gehäuse 19 in Richtung vom Behälter 1 weg erstrecken, desto mehr Kühlkanäle 34 sind zweckmäßig vorzusehen.

Wenngleich die Ausbildung der beiden Schnecken 21, 22 mit gleichem und konstantem Gangdurchmesser d (Fig. 7) aus Kostengründen am günstigsten ist, so ist dies nicht unbedingt erforderlich. Fig. 15 zeigt nämlich eine Ausführungsform mit zwei Schnecken 21, 22, die beide konisch ausgebildet sind und gemeinsam einen Doppelschneckenextruder bilden, der zu einem Extruderkopf 31 fördert. Die beiden Schnecken 21, 22 sind hierbei gegenläufig über miteinander kämmende Zahnräder 38 von einem gemeinsamen Motor 23 angetrieben. Ihre Schneckengänge 30 können miteinander kämmen, sodass also auch bei dieser Ausführungsform eine Selbstreinigung im Einzugsbereich erzielt wird.

Wenngleich die horizontale Anordnung des die Schnecken aufweisenden Gehäuses 19 die günstigste ist, so ist es im Prinzip möglich, dieses Gehäuse mit geneigter Längsachse an den Behälter 1 anzuschließen, gegebenenfalls sogar vertikal.

Wenngleich bei den vorstehend beschriebenen Ausführungsbeispielen jeweils nur zwei Schnecken dargestellt sind, so sind theoretisch auch Konstruktionen mit drei oder mehr Schnecken in analoger Bauweise möglich, für welche Konstruktionen die zuvor erwähnten Formeln ebenfalls gelten. Solche mit drei oder mehr Schnecken versehene Konstruktionen sind aber aus wirtschaftlichen Gründen nicht von wesentlicher Bedeutung.

## Patentansprüche

1. Vorrichtung zur Aufbereitung von Kunststoffmaterial zu Recyclingzwecken, insbesondere thermoplastischem Kunststoffmaterial, mit einem Behälter (1), in den das zu verarbeitende Material von oben durch eine Einbringeöffnung (10) eingebracht wird, und mit zumindest einem im Behälter (1) angeordneten, um die vertikale Achse (2) des Behälters (1) umlaufenden Misch- und/oder Zerkleinerungswerkzeug (14), wobei das von diesem Werkzeug (14) behandelte Material in eine im Behälter (1) unten angeordnete Ausbringeöffnung (17) geleitet wird, mit der die Einzugsöffnung (18) eines an den Behälter (1) tangential angeschlossenen Schnecgens gehäuses (19) in Strömungsverbindung steht, und wobei jene Seitenwand (28) der Einzugsöffnung (18), an der das Werkzeug (14) abläuft, im Schnitt gesehen, eine gegen die Achse (29) des Gehäuses (19) der Schnecke (21) kontinuierlich verlaufende Erweiterung (36) der Einzugsöffnung (18) berandet, **dadurch gekennzeichnet, dass** diese Erweiterung (36) sich, in Richtung zur Achse (29) des Gehäuses (19) von zwei oder mehr Schnecken (21, 22) gesehen, über einen Teil des Umfanges der benachbarten Schnekke (21, 22) erstreckt, sodass die schneckenseitige Kante dieser Erweiterung (36) eine mit diesen Schneckengängen (30) zusammenwirkende unterbrechungslose Scherkante (39) bildet.

2. Vorrichtung nach Anspruch 1, **dadurch gekennzeichnet, dass** sich die Erweiterung (36) bis in den Bereich der Schneckenachse erstreckt.

3. Vorrichtung nach Anspruch 1 oder 2, **dadurch ge-**

**kennzeichnet, dass** die die Erweiterung (36) begrenzende Seitenwand (28) der Einzugsöffnung (18) mit der Schneckenachse einen Winkel zwischen 20 und 80° einschließt, vorzugsweise zwischen 30 und 55°.

4. Vorrichtung nach Anspruch 1, 2 oder 3, **dadurch gekennzeichnet, dass** für die Einzugsöffnung (18) des Gehäuses (19) der Schnecke(n) (21, 22) folgende Formeln gelten:

$$h \geq k\, 0{,}6\, d$$

und

$$L \geq k\, 0{,}6\, d,$$

worin bedeuten:

h die in Achsrichtung des Behälters (1) gemessene wirksame Höhe der Einzugsöffnung (18) in mm,
L die in Umfangsrichtung des Behälters (1) gemessene wirksame Länge der Einzugsöffnung (18) in mm,
d der Außendurchmesser. der Schnecken (21, 22) in mm und
k die Anzahl der Schnecken, wobei k vorzugsweise 2 ist.

5. Vorrichtung nach einem der Ansprüche 1 bis 4, **dadurch gekennzeichnet, dass** der Boden (33) der Einzugsöffnung (18) von der Schnecken (21, 22) in Richtung zum Behälter (1) abfällt.

6. Vorrichtung nach einem der Ansprüche 1 bis 5, **dadurch gekennzeichnet, dass** bei zwei Schnecken (21, 22) im Gehäuse (19) die Schnecken (21, 22) möglichst nahe dem behälterseitigen Rand der Einzugsöffnung (18) liegen.

7. Vorrichtung nach einem der Ansprüche 1 bis 6, **dadurch gekennzeichnet, dass** bei zwei Schnecken (21, 22) in dem den Schnecken (21, 22) benachbarten Wandabschnitt des Gehäuses (19) Kühlkanäle (34) vorgesehen sind.

8. Vorrichtung nach einem der Ansprüche 1 bis 7, **dadurch gekennzeichnet, dass** bei zwei Schnecken (21, 22) der Durchmesser (D) des Behälters (1) zum Durchmesser (d) jeder der beiden Schnecken in folgender Beziehung steht:

$$D = 10 \sqrt[3]{d^2 K} \, ,$$

worin

D der Innendurchmesser des kreiszylindrischen Behälters (1) in mm oder der Innendurchmesser eines auf gleiches Fassungsvolumen umgerechneten fiktiven kreiszylindrischen Behälters gleicher wirksamer Höhe ist,
d der Schneckendurchmesser in mm ist und
K eine Konstant ist, welche größer oder gleich 50 ist, vorzugsweise größer als 100.

9. Vorrichtung nach einem der Ansprüche 1 bis 8, **dadurch gekennzeichnet, dass** bei zwei Schnecken (21, 22) die Querschnitte der beiden Schnecken (21, 22) im Bereich der Einzugsöffnung (18) vertikal oder schräg übereinander liegen.

10. Vorrichtung nach einem der Ansprüche 1 bis 9, **dadurch gekennzeichnet, dass** bei zwei Schnecken (21, 22) die Schneckengänge (30) der beiden Schnecken (21, 22) zumindest im Bereich der Einzugsöffnung (18) miteinander kämmen.

**Claims**

1. A device for the preparation of plastics material for recycling purposes, in particular thermoplastic plastics material, comprising a container (1) which has an inlet opening (10), through which the material to be processed is provided from above, wherein at least one mixing and/or comminuting tool (14) is arranged in the container (1) and rotates about the vertical container axis (2), wherein the material treated by this tool (14) is fed through an outlet opening (17) which is arranged at the bottom of the container (1)
and to which the feed opening (18) of a screw housing (19) connected tangentially to the circumference of the container (1) is fluidically connected
and wherein each side wall (28) of the feed opening (18), at which the tools (14) adjoin, defines a widening (36) of the feed opening (18) seen in section, the widening (36) extending continuously towards the longitudinal axis (29) of the housing (19) the screw (21)
**characterized in that**
the widening (36) extending seen in the direction of the axes of the housing (19) of the two or more screws (21, 22) as far as the circumference of the adjacent screw (21, 22), into the region of the screw axis, seen in the direction of the axis (29) of the housing (19) of the two or more screws (20, 21) so that the edge of this widening (36) adjacent to the screw forms an uninterrupted sharing edge (39) cooperating with these screw turns (30).

2. A device according to claim 1, **characterised in that** the widening (36) extends into the region of the screw axis.

3. A device according to claim 1 or 2, **characterised in that** the side wall (28) defining the widening (36) of the feed opening (18) forms an angle between 20° and 80°, preferably between 30° and 55°, with the axis of the screw.

4. A device according to any one of claims 1, 2 or 3, **characterised in that** the following formulae apply to the feed opening (18) of the housing (19) of the screw(s) (21, 22):

$$h \geq k \, 0.6 \, d$$

and

$$L \geq k \, 0.6 \, d,$$

where

h is the effective height of the feed opening (18) in mm, measured in the axial direction of the container (1),
L is the effective length of the feed opening (18) in mm, measured in the circumferential direction of the container (1),
d is the outer diameter of the screws (21, 22) in mm and
k is the number of screws, k preferably being 2.

5. A device according to any one of claims 1 to 4, **characterised in that** the base (33) of the feed opening (18) slopes downwards from the screws (21, 22) towards the container (1).

6. A device according to any one of claims 1 to 5, **characterised in that** when using two screws (21, 22) the screws (21, 22) are arranged within the housing (19) possibly close to the border adjacent to the container of the feed opening (18).

7. A device according to any one of claims 1 to 6, **characterised in that** when using two screws (21, 22) cooling ducts (34) are provided in the region of the housing (19) adjacent to the screws (21, 22).

8. A device according to any one of claims 1 to 7, **char-**

**acterized in that** when using two screws (21, 22) the diameter of (D) of the container (21) and the diameter (d) of each of both screws are in the following relationship:

$$D = 10 \sqrt[3]{d^2\ K}\ \ ,$$

where

D is the inner diameter of the circular cylindrical container (1) in mm or the inner diameter of a hypothetical circular cylindrical container converted to the same capacity and having the same effective height,
d is the screw diameter in mm and
K is a constant greater than or equal to 50, preferably greater than 100.

9. A device according to any one of claims 1 to 8, **characterised in that** when using two screws the cross-sections of the screws (21, 22) lie vertically or obliquely above one another in the region of the feed opening (18).

10. A device according to any one of claims 1 to 9, **characterised in that** when using two screws the turns (30) of the screws (21, 22) mesh with one another at least in the region of the feed opening (18).

**Revendications**

1. Dispositif de traitement d'un matériau plastique en vue de son recyclage, particulièrement d'un matériau thermoplastique, comprenant un récipient (1), dans lequel on introduit d'en haut le matériau à traiter à travers un orifice d'introduction (10), et au moins un outil mélangeur et/ou de fragmentation (14) disposé dans le récipient (1) et tournant autour de l'axe (2) vertical du récipient (1), le matériau traité par cet outil (14) étant guidé dans un orifice de décharge (17) disposé dans le récipient (1) en bas, avec lequel un orifice d'amenée (18) d'un carter (19) d'une vis sans fin relié tangentiellement au récipient (1) est en communication d'écoulement, et dans lequel cette paroi latérale (28) de l'orifice d'amenée (18), à laquelle l'outil (14) défile, vu en coupe transversal, délimite un élargissement (36) de l'orifice d'amenée (18), qui s'étend continuellement vers l'axe (29) du carter (19) de la vis (21), **caractérisé en ce, que** cet élargissement (36), vu en direction vers l'axe (29) du carter (19) de deux ou plusieurs vis (21, 22), s'étend sur une partie de la périphérie de la vis adjacente (21, 22), de manière que l'arête de cet élargissement (36) au côté de la vis forme une arête de cisaillement continuelle (39), qui coopère avec ces spires de vis (30).

2. Dispositif selon la revendication 1, **caractérisé en ce, que** l'élargissement (36) s'étend jusqu'à la zone de l'axe de vis.

3. Dispositif selon la revendication 1 ou 2, **caractérisé en ce, que** la paroi latérale (28) de l'orifice d'amenée (18), qui délimite l'élargissement (36), forme un angle avec l'axe de vis entre 20 et 80°, de préférence entre 30 et 55°.

4. Dispositif selon la revendication 1, 2 ou 3, **caractérisé en ce, que** les formules suivantes sont en vigueur pour l'orifice d'amenée (18) du carter (19) de la/des vis (21,22):

$$h \geq k\ 0,6\ d$$

et

$$L \geq k\ 0,6\ d$$

dans lesquelles:

h signifie l'hauteur effective de l'orifice d'amenée (18) mesurée en mm en direction de l'axe du récipient (1),
L est la longueur effective de l'orifice d'amenée (18) mesurée en mm en direction de la périphérie du récipient (1),
d signifie le diamètre extérieur des vis (21, 22) en mm, et
k est le nombre des vis, k étant de préférence 2.

5. Dispositif selon une quelconque des revendications 1 à 4, **caractérisé en ce, que** le fond (33) de l'orifice d'amenée (18) est incliné à partir des vis (21, 22) en direction vers le récipient (1).

6. Dispositif selon une quelconque des revendications 1 à 5, **caractérisé en ce, qu'**avec deux vis (21, 22) dans le carter (19), les vis (21, 22) sont si proche que possible au bord de l'orifice d'amenée (18) proche au récipient.

7. Dispositif selon une quelconque des revendications 1 à 6, **caractérisé en ce, qu'**avec deux vis (21, 22), des canaux de refroidissement (34) sont prévus dans la section de paroi du carter (19), qui est voisin aux vis (21, 22).

**8.** Dispositif selon une quelconque des revendications 1 à 7, **caractérisé en ce, qu**'avec deux vis (21, 22), le diamètre (D) du récipient (1) a la relation suivante au diamètre (d) de chacune des deux vis:

$$D = 10 \sqrt[3]{d^2 K},$$

dans laquelle

D est le diamètre intérieur du récipient (1) cylindrique circulaire en mm ou le diamètre intérieur d'un récipient fictif de la même hauteur effective converti à la même contenance,
d est le diamètre de vis en mm, et
K est une constante plus grande ou égale à 50, préférablement plus grande de 100.

**9.** Dispositif selon une quelconque des revendications 1 à 8, **caractérisé en ce, qu**'avec deux vis (21, 22), les profiles en travers des deux vis (21, 22), dans la zone de l'orifice d'amenée (18) sont superposés soit verticalement, soit obliquement.

**10.** Dispositif selon une quelconque des revendications 1 à 9, **caractérisé en ce, qu**'avec deux vis (21, 22), les spires de vis (30) des deux vis (21, 22) s'engrènent au moins dans la zone de l'orifice d'amenée (18).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

**EP 1 628 812 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0139948 A
- AT 407972 B
- WO 0074992 A
- DE 2351328 A
- US 3327347 A